(19) Europäisches Patentamt / European Patent Office / Office européen des brevets

(11) **EP 3 875 876 B1**

(12) **FASCICULE DE BREVET EUROPEEN**

(45) Date de publication et mention de la délivrance du brevet:
**19.04.2023 Bulletin 2023/16**

(21) Numéro de dépôt: **21158454.5**

(22) Date de dépôt: **22.02.2021**

(51) Classification Internationale des Brevets (IPC):
**F25J 3/04** *(2006.01)*    **B01D 53/10** *(2006.01)*
**C01B 23/00** *(2006.01)*    **B01D 15/02** *(2006.01)*
**B01D 3/34** *(2006.01)*    **B01D 3/14** *(2006.01)*

(52) Classification Coopérative des Brevets (CPC):
**F25J 3/04654; B01D 3/143; B01D 3/34;**
**B01D 53/10; C01B 23/0052; F25J 3/04672;**
**F25J 3/04733;** B01D 2253/108; B01D 2256/18;
B01D 2257/102; B01D 2257/104;
B01D 2259/40086; C01B 2210/0034;
C01B 2210/0045; C01B 2210/0046;   (Cont.)

(54) **PROCÉDÉ ET APPAREIL DE DISTILLATION ADSORPTIVE POUR LA SÉPARATION CRYOGÉNIQUE ARGON-OXYGÈNE**

VERFAHREN UND VORRICHTUNG ZUR ADSORPTIVEN DESTILLATION FÜR DIE KRYOGENE ARGON-SAUERSTOFF-TRENNUNG

METHOD AND DEVICE FOR ADSORPTIVE DISTILLATION FOR CRYOGENIC SEPARATION OF ARGON AND OXYGEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2020 FR 2002143**

(43) Date de publication de la demande:
**08.09.2021 Bulletin 2021/36**

(73) Titulaire: **L'AIR LIQUIDE, SOCIETE ANONYME POUR L'ETUDE ET L'EXPLOITATION DES PROCEDES GEORGES CLAUDE**
**75007 Paris (FR)**

(72) Inventeurs:
• **KOFMAN, Nicolas**
  **78350 LES LOGES EN JOSAS (FR)**
• **BEDNARSKI, David**
  **78350 LES LOGES EN JOSAS (FR)**
• **SAULNIER, Bernard**
  **78350 LES LOGES EN JOSAS (FR)**
• **CARDON, Guillaume**
  **78350 LES LOGES EN JOSAS (FR)**
• **WATTIAU, Mikael**
  **78350 LES LOGES EN JOSAS (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
**EP-A1- 0 750 933**    **US-A- 3 996 028**
**US-A- 5 159 816**    **US-B1- 9 708 188**

(52) Classification Coopérative des Brevets (CPC):
(Cont.)
F25J 2205/60

## Description

La présente invention est relative à un procédé et à un appareil de distillation adsorptive pour la séparation cryogénique d'un mélange d'argon et d'oxygène.

La production d'argon s'effectue à l'heure actuelle par distillation cryogénique à partir d'un fluide enrichi en argon issu de la colonne principale basse pression comme décrit dans "Industrial Gases Processing", Wiley VCH 2008. La colonne supplémentaire nécessaire à cette séparation est très haute en raison de la proximité des points d'ébullition de l'argon et de l'oxygène (respectivement -186°C et -183°C à $P_{atm}$).

D'une part, cela entraîne un coût d'installation important et d'autre part cela limite fortement la flexibilité du procédé : le temps de redémarrage de l'unité à partir de la mise en route du condenseur, par exemple, est d'environ 24h. Il existe un procédé alternatif d'Argon « chaud » : une colonne de hauteur standard produit un gaz contenant 2-5% d'$O_2$, le restant étant brûlé par combustion avec de l'$H_2$. Cette solution n'en est pas moins coûteuse car (i) elle nécessite une source d'$H_2$ et (ii) le gaz doit être intégralement chauffé puis refroidi.

L'invention décrite ici permet de diminuer le nombre de plateaux ou la quantité de garnissages de la colonne de production d'argon en conservant les mêmes spécifications d'entrée-sortie. Pour cela, des microbilles absorbantes présentant une sélectivité $O_2$/Ar sont mises en suspension dans le liquide.

L'invention permet de diminuer le nombre de plateaux théoriques de la colonne de distillation grâce au piégeage sélectif de l'oxygène vis-à-vis de l'argon par les billes. Bien qu'il n'existe pas à l'heure actuelle d'adsorbant présentant une bonne sélectivité $O_2$/Ar à température ambiante (ex : 1.5 pour Ca-X, 1.8 pour Sr-X comme décrit dans Peter SA, Moharir AS, Jasra RV, Sélective Adsorption of Oxygen over Argon in Alkaline-Earth-Metal Cation-Exchanged Zeolite X, Ind. Eng. Chem. Res. 49 (16), 2010), il n'en est pas de même à température cryogénique. La LTA4A possède, par exemple, une sélectivité de 5 à 87K, le record étant détenu par un MOF dénommé CUK-1 qui possède une sélectivité de 11 à 87K.

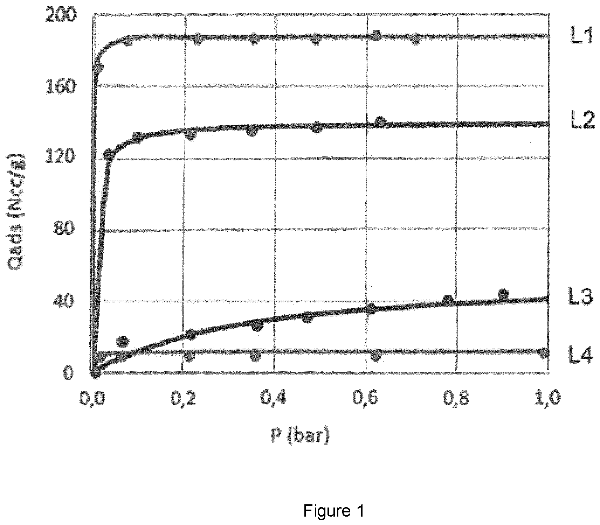

[Fig. 1] illustre la quantité adsorbée $Q_{ads}$ d'oxygène et d'argon comparée à la pression P à 87K isotherme. L1 indique la quantité adsorbée $Q_{ads}$ d'oxygène pour CUK-1, L2 indique la quantité adsorbée $Q_{ads}$ d'argon pour CUK-1, L3 indique la quantité adsorbée $Q_{ads}$ d'oxygène pour LTA 4A, L4 indique la quantité adsorbée $Q_{ads}$ d'argon pour LTA 4A.

Nous mentionnons que contrairement aux cas cités précédemment à température ambiante où la séparation est contrôlée par la différence d'équilibre, l'adsorption sur la LTA 4A et CUK-1 résulte d'une exclusion stérique. La définition utilisée dans ce cas pour la sélectivité, qui fait davantage de sens que la définition usuelle, est le rapport des quantités adsorbées d'Oxygène et d'Argon aux pressions partielles d'intérêt (ici pour un mélange 5% $O_2$ - 95% Ar).

Les solutions actuelles de production d'argon partent toutes d'un flux d'entrée à température cryogénique composé d'environ 10% Ar et 90% $O_2$ (« ventre argon » de la colonne principale basse pression). Ces procédés d'argon « froid » et « chaud » permettent de produire un gaz composé d'1 ppm d'$O_2$ et 0,5% d'$N_2$ (l'azote peut être éliminé par une petite colonne de distillation supplémentaire). Signalons également qu'il existe des procédés alternatifs : (i) un procédé qui combine distillation, pour produire un gaz contenant 2-5% d'$O_2$, et adsorption cryogénique par TSA sur la LTA 4A, pour terminer la séparation comme décrit dans US5159816 et (ii) un procédé qui réalise la purification d'argon liquide contenant des traces d'$O_2$ jusqu'à 1% par adsorption sur la zéolite LTA 4A échangée à 42% avec du lithium comme décrit dans US2014/0245781, (l'échange de cation améliore les performances de l'adsorption en phase liquide).

[Fig. 1] illustre les isothermes oxygène et argon à 87K sur le MOF CUK-1 et la LTA 4A pris dans Yoon JW, Jhung SH, Hwang YK, Humphrey SM, Wood PT and Chang JS. Gas-Sorption Selectivity of CUK-1: A Porous Coordination Solid Made of Cobalt(II) and Pyridine-2,4-Dicarboxylic Acid, Advanced Materials 19 (1830), 2007.

EP0750933 décrit un procédé et un appareil conformément aux préambules des revendications 1 et 10 respectivement.

Selon un objet de l'invention, il est prévu un procédé de séparation d'argon par distillation cryogénique dans lequel :

- un débit contenant de l'argon, de l'oxygène et de l'azote, plus riche en argon que l'air, est envoyé à une colonne de distillation,
- un débit gazeux riche en argon est soutiré en tête de la colonne,

caractérisé en ce qu'une partie du débit gazeux riche en argon est mélangée avec des billes ayant un diamètre inférieur à 5mm, de préférence inférieur à 100 $\mu$m, pour former un mélange gazeux contenant des billes, les billes étant en une matière adsorptive ou étant revêtues d'une matière adsorptive, la matière adsorptive étant capable d'adsorber de l'oxygène en présence d'argon aux températures d'opération de la colonne, la partie du débit gazeux riche en argon mélangée avec les billes est condensée puis est envoyée en tête de la colonne et un liquide de cuve contenant des billes est soutiré de la colonne et traité pour enlever les billes, les billes enlevées sont régénérées pour enlever l'oxygène adsorbé et sont de nouveau mélangées avec la partie du débit gazeux riche en argon.

Selon d'autres aspects facultatifs, pouvant être combinés entre eux, selon les limites de la technique et de la logique :

- le mélange gazeux contenant des billes comprend moins que 5% massique, de préférence moins que 1,5% massique, de billes.

- le liquide de cuve est traité dans un cyclone ou filtré pour enlever les billes.

- les billes sont régénérées en passant un débit d'azote gazeux entre les billes à une température supérieure à 90 K.

- la colonne contient des garnissages structurés ou des plateaux.

- la densité des billes diffère d'au plus 10% de celle de mélange condensé.

- les billes sont en ou portent un revêtement en un matériau choisi dans le groupe zéolite ou matériau organométallique, par exemple LTA4A ou CUK-1.

- un liquide contenant des billes étant en une matière adsorptive ou étant revêtues d'une matière adsorptive, la matière adsorptive étant capable d'adsorber de l'oxygène en présence d'argon aux températures d'opération de la colonne, est soutiré à un niveau intermédiaire de la colonne, au moins certaines des billes étant de préférence saturées en oxygène.

- un liquide contenant des billes étant en une matière adsorptive ou étant revêtues d'une matière adsorptive, la matière adsorptive étant capable d'adsorber de l'oxygène en présence d'argon aux températures d'opération de la colonne, est injecté à un niveau intermédiaire de la colonne.

Selon un autre objet de l'invention, il est prévu un appareil de séparation d'argon par distillation cryogénique comprenant une colonne de distillation, des moyens pour envoyer un débit contenant de l'argon, de l'oxygène et de l'azote, plus riche en argon que l'air, à la colonne de distillation, des moyens pour soutirer un débit gazeux riche en argon en tête de la colonne, caractérisé en ce qu'il comprend un mélangeur pour mélanger une partie du débit gazeux riche en argon avec des billes ayant un diamètre inférieur à 5mm, voire inférieur à 100 $\mu$m pour former un mélange gazeux contenant des billes, les billes étant en une matière adsorptive ou étant revêtues d'une matière adsorptive, la matière adsorptive étant capable d'adsorber de l'oxygène en présence d'argon aux températures d'opération de la colonne, un condenseur pour condenser la partie gazeuse du mélange, et une conduite pour envoyer le mélange condensé contenant des billes du condenseur en tête de la colonne, une conduite pour soutirer un liquide de cuve contenant des billes de la colonne, un dispositif pour séparer les billes du liquide de cuve, un appareil de régénération pour régénérer les billes séparées pour enlever l'oxygène adsorbé et une conduite pour envoyer les biles régénérées au mélangeur.

De préférence l'appareil comprend une conduite pour envoyer un liquide contenant de l'argon et des billes régénérées et éventuellement de l'oxygène à un niveau intermédiaire de la colonne.

De préférence l'appareil comprend une conduite pour soutirer un liquide contenant de l'argon et des billes à régénérer et éventuellement de l'oxygène relié à un niveau intermédiaire de la colonne.

Eventuellement une conduite unique peut servir à envoyer le liquide contenant de l'argon et des billes régénérées et éventuellement de l'oxygène à un niveau intermédiaire de la colonne et à soutirer un liquide contenant de l'argon et des billes à régénérer et éventuellement de l'oxygène au même niveau.

La ou les conduite(s) est/sont reliée(s) à des moyens pour régénérer les billes.

De préférence, l'appareil comprend un filtre ou un cyclone pour séparer les billes du liquide de cuve.

L'appareil peut comprendre des moyens pour passer un débit d'azote gazeux entre les billes à une température supérieure à 90 K.

Les billes peuvent être en ou porter un revêtement en un matériau choisi dans le groupe zéolite ou matériau organométallique, par exemple LTA 4A ou CUK-1.

L'appareil peut comprendre des moyens pour envoyer à un niveau intermédiaire de la colonne un liquide contenant des billes étant en une matière adsorptive ou étant revêtues d'une matière adsorptive, la matière adsorptive étant capable d'adsorber de l'oxygène en présence d'argon aux températures d'opération de la colonne.

L'invention sera décrite de manière plus détaillée en se référant aux figures.

[Fig. 2] illustre un procédé hybride distillation/adsorption selon l'invention.

[Fig. 3] comprend une figure 3A illustrant le diagramme de McCabe-Thiele pour la distillation ordinaire et une figure 3B illustrant le diagramme de McCabe-Thiele pour la distillation adsorptive pour une colonne opérant selon l'invention.

[Fig. 4] montre la variation de la teneur en oxygène dans la colonne en fonction du nombre N de plateaux dans la colonne.

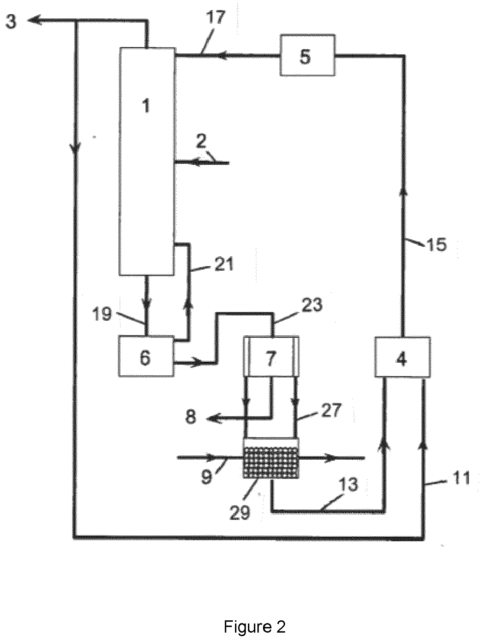

[Fig. 2] illustre un procédé hybride distillation/adsorption, ce qui est avantageux du point de vue de l'intégration des éléments. Une colonne de distillation 1 comportant un nombre réduit de plateaux ou une quantité réduite de garnissages vis-à-vis du cas de la distillation pure est employée. Les plateaux sont préférés pour ce procédé puisqu'ils présentent un plus petit nombre d'interstices où les billes pourraient se loger, par rapport aux garnissages.

Un flux de gaz 2 à température cryogénique, composé par exemple de 10% Ar - 90% $O_2$ et de traces d'azote, est injecté dans la colonne 1. La position d'entrée dépend de la composition du flux et peut être en cuve de la colonne 1 ou à un point intermédiaire. Ce flux 2 provient typiquement de la colonne basse pression d'une double colonne de séparation d'air. Un flux d'argon gazeux comportant 1 ppm d'$O_2$ et 0,5% d'$N_2$ est soutiré en tête de la colonne 1. Une petite partie de ce flux constitue le produit 3, la grande majorité 11 étant redirigée vers un mélangeur 4. Au sein de ce dernier, des microbilles absorbantes régénérées sont mélangées efficacement au flux d'argon gazeux. Les billes ont un diamètre inférieur à 5mm, voire inférieur à 100 $\mu$m. Le flux 15 constitué par le mélange de billes et d'argon gazeux, passe ensuite dans un condenseur 5 puis est réinjecté sous forme liquide mélangé aux billes 17 en tête de colonne. Les billes, au fur et à mesure de leur descente de la colonne 1, se chargent en $O_2$ : leur régénération s'effectue en partie basse de la colonne 1. Le liquide de cuve 19 de la colonne est envoyé à un rebouilleur 6 qui vaporise partiellement le liquide de cuve. Le gaz formé 21 est renvoyé à la colonne 1 en cuve. Le liquide non vaporisé 23 issu du bouilleur 6 est envoyé dans un séparateur de type cyclone 7. Un flux d'$O_2$ liquide impur 8 est récupéré au centre du séparateur 7 alors que les billes en suspension 27 sont éjectées vers la périphérie du cyclone. Elles sont alors régénérées par un flux d'$N_2$ gazeux 9 à une température supérieure à 90K dans un dispositif de régénération 29 avant de passer dans le mélangeur 4 comme flux 13.

Les billes peuvent également être séparées du liquide dans lequel elles se trouvent par filtration. De préférence elles sont séparées par deux filtres fonctionnant en intermittence. Alors qu'un filtre sépare les billes, l'autre peut être débouché par un débit de gaz à contre-courant, permettant de récupérer les billes.

Dans ce procédé, la taille typique des billes absorbantes est une dizaine de $\mu$m afin d'être très inférieure à l'épaisseur typique du film de liquide dans les garnissages (100 $\mu$m). Par ailleurs, les billes sont très diluées dans le liquide 17 (fraction massique de billes de l'ordre de 1%) de façon à ce qu'elles ne perturbent pas l'écoulement de liquide dans les garnissages ou plateaux. Afin d'assurer une répartition homogène des billes dans le liquide, leur densité est choisie proche de celle du liquide (~ 1250 kg/m$^3$). La densité du lit d'adsorbant correspondante est alors d'environ 800 kg/m$^3$. Leur petite taille assure par ailleurs un bon transport par le flux d'argon gazeux.

Les billes peuvent par exemple être en CUK-1 ou LTA 4A ou peuvent porter un revêtement de CUK-1 ou de LTA 4A. Ces billes portant un revêtement sont des "billes à coeur inerte". Dans les procédés d'adsorption de type PSA, elles permettent de limiter les pertes de charge tout en conservant une bonne capacité d'adsorption, le coeur d'une bille 100% absorbante ne travaillant pas si la cinétique est "lente". Dans ce cas, le fait que le corps de la bille soit dans un matériau autre que celui du revêtement permet d'ajuster la densité des billes à celle du liquide en choisissant le bon matériau.

Les billes peuvent être soutirées et/ou injectées à des positions intermédiaires selon la hauteur de la colonne 1. En effet, d'une part les billes sont saturées en dessous d'une certaine hauteur et donc ne captent plus d'oxygène.

La colonne 1, le mélangeur 4, les moyens de séparation 7 et les moyens de régénération 29 sont disposés à l'intérieur d'une boîte froide isolée (non illustré).

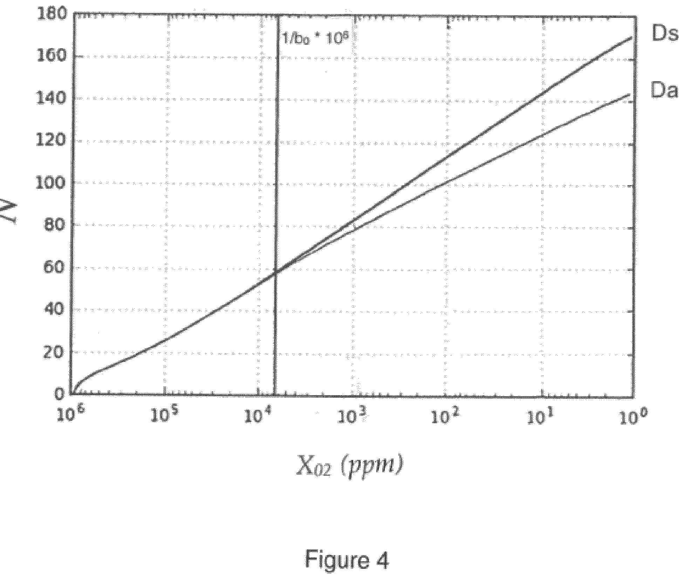

[Fig. 4] illustre en effet qu'entre la cuve de la colonne et la soixantième plateau en comptant à partir de la cuve, pour une colonne à 180 plateaux, la distillation adsorptive (Da) est moins performante que la distillation non-adsorptive (Ds), puisque les billes perdent leur pouvoir d'adsorption à partir de ce niveau et l'adsorption dans la partie inférieure est moins efficace. Ainsi on voit que la quantité d'oxygène dans la colonne en ppm est supérieure pour la distillation non-adsorptive pour les plateaux entre le 60$^{ème}$ et le 180$^{ème}$, alors que les performances sont équivalentes pour les plateaux 1 à 60.

D'autre part, même si les billes ne sont pas saturées, le fait de soutirer et/ou injecter les billes à une position intermédiaire permet de regagner de l'efficacité dans la partie inférieure de la colonne.

De cette façon, il est possible d'agir sur la distillation s'il est constaté que les puretés ne correspondent pas aux besoins.

Dans ce cas, les billes seront soutirées avec un liquide ayant une composition qui est celle du point intermédiaire de la colonne. Les billes sont ensuite séparées, par exemple par cyclone ou par filtration, et régénérées. Les billes régénérées prise à hauteur intermédiaire de la colonne peuvent être réinjectées en haut de la colonne et/ou à un point intermédiaire de la colonne. En cas de réinjection à un point intermédiaire, il sera nécessaire de veiller à ce que la composition du liquide injecté avec les billes est équivalent à celle des liquides à l'intérieur de la colonne du point d'injection.

En raison de leur faible proportion dans le liquide, le coût énergétique de la régénération des billes absorbantes est petit devant le coût global de production d'argon liquide qui est d'environ 5 kWh/Nm$^3$.

Il n'existe pas à notre connaissance dans la littérature de mesures d'isothermes en phase liquide pour le système $O_2$/Ar (les données présentées dans la [Fig. 1] sont en phase gaz). Il convient donc de s'interroger sur l'extension possible des performances observées en phase gaz au point d'équilibre liquide-vapeur. En supposant que l'argon s'adsorbe très peu et que les concentrations d'$O_2$ en présence sont faibles, nous ferons l'hypothèse que le modèle de Langmuir reste valable (solution très diluée). Il faut s'attendre à ce que les quantités adsorbées en phase liquide soient plus faibles que celles en phase gaz car l'énergie d'interaction liquide-liquide (enthalpie de vaporisation : ~ 7 kJ/mol) n'est plus très inférieure à l'enthalpie d'adsorption (énergie d'interaction gaz-solide : ~ 30 kJ/mol). Pour comparaison, l'énergie d'interaction gaz-gaz est, elle, d'environ 1 kJ/mol.

Sous ces hypothèses, le gain possible en terme de nombre de plateaux théoriques en fonction des propriétés de l'adsorbant a été évalué par une approche de type McCabe-Thiele). Pour passer de 1% à 1 ppm d'$O_2$, le nombre de plateaux passe de N = 120 (en l'absence des billes) à N = 90 (avec les propriétés de CUK-1). Le gain en terme de nombre de plateaux peut être amélioré en augmentant la fraction massique de billes (auquel cas le coût énergétique engendré par la régénération des billes augmente également).

La hauteur de la colonne de distillation H s'exprime en fonction du nombre de plateaux théoriques $N_{plat}$ et de la Hauteur Equivalente à un Plateau Théorique HETP :

$$H = HETP \times N_{plat}$$

La HETP dépend, elle, de la courbe d'équilibre liquide-vapeur et des propriétés de transfert de matière côté gaz et liquide Nous supposerons que la pente de la courbe d'équilibre liquide-vapeur m reste inchangée : pas de modification des forces intermoléculaires par les billes (suspension très diluée). L'aire interfaciale $a_e$ et le coefficient de transfert côté liquide $k_L$ sont également supposés rester inchangés (pas d'accumulation de billes à l'interface).

Ainsi, les billes sont supposées agir simplement comme un puits de matière et leur effet sur le nombre de plateaux théorique peut être estimé à partir de la construction de McCabe-Thiele. Cette construction suppose que la chaleur de vaporisation est indépendante de la composition du mélange.

Or, en effet :

$$\Delta H(Ar) = 68 \sim \Delta H(O_2) = 71 \, kcal/Nm^3$$

La volatilité relative $\alpha$, elle, est prise variable avec la composition X du mélange selon la relation :

$$\alpha = 1.5 - 0.4 X_{liq}(Ar)$$

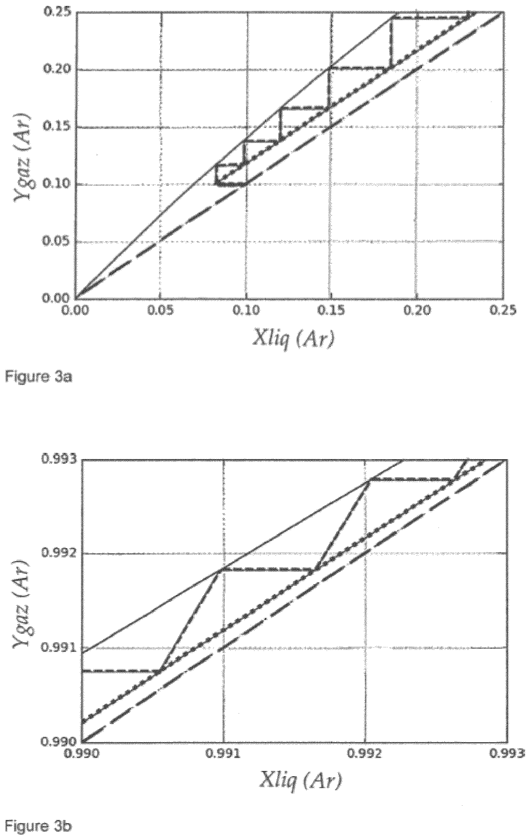

Le taux de reflux R = L/D est pris égal à 50 de sorte que le nombre de plateaux théorique pour passer de 90% d'$O_2$ à 1 ppm est de 170 (cohérent avec la réalité). 50 plateaux sont nécessaires pour passer de 90% à 1% et 120 plateaux pour passer de 1% à 1 ppm. Pour se déplacer dans le diagramme de McCabe-Thiele, une étape supplémentaire est ajoutée en plus de l'aller-retour entre la droite opératoire et la courbe d'équilibre : cette étape consiste à diminuer la fraction molaire d'argon dans le liquide en fonction des quantités adsorbées à l'équilibre d'argon et d'oxygène [Fig. 3] comprend une figure 3A illustrant le diagramme de McCabe-Thiele pour la distillation ordinaire comparant les quantités d'argon dans le gaz et le liquide et une figure 3B illustrant le diagramme de McCabe-Thiele pour la distillation adsorptive comparant les quantités d'argon dans le gaz et le liquide. Dans la figure 3A, la ligne illustre l'alimentation à 0,10 dans le gaz.

La ligne solide indique la ligne d'équilibre, la ligne en étoiles la ligne opératoire, la ligne en zigzag entre les deux la ligne McCabe Thiele, la ligne en gros lignes la ligne y=x et la ligne en petits ovales l'alimentation.

$$X'_{liq}(Ar) = \frac{X_{liq}(Ar) - q(Ar)x_S M_{tot}}{1 - [q(O_2) + q(Ar)]x_S M_{tot}}$$

Dans l'expression précédente, $x_S$ est la fraction massique de billes dans le liquide et $M_{tot}$ la masse molaire du mélange. Les quantités adsorbées d'Ar q(Ar) et d'$O_2$ q($O_2$) sont supposées suivre le modèle de Langmuir

$$q = \frac{q_{sat} bX}{1 + bX}$$

où $q_{sat}$ est la quantité adsorbée à saturation , b est la constante d'équilibre et X est la teneur en impureté.

Les coefficients du modèle pour CUK-1 à 87 K sont donnés dans le tableau qui suit.

| ¤ | $q_{sat}$-(Ncc/g)¤ | b·(-)¤ | ¤ |
|---|---|---|---|
| Argon¤ | 12¤ | 150¤ | ¤ |
| Oxygène¤ | 140¤ | 150¤ | ¤ |

où $q_{sat}$ est la quantité adsorbée à saturation et b est la constante d'équilibre.

Le nombre de plateaux est calculé en cheminant de proche en proche dans le diagramme et les quantités nouvellement adsorbées à chaque plateau sont calculées par différence entre les quantités d'équilibre et celles déjà adsorbées aux plateaux précédents.

**Revendications**

1. Procédé de séparation d'argon par distillation cryogénique dans lequel :

   • un débit (2) contenant de l'argon, de l'oxygène et de l'azote, plus riche en argon que l'air, est envoyé à une colonne de distillation (1),
   • un débit gazeux riche en argon (3) est soutiré en tête de la colonne,

   **caractérisé en ce qu'**une partie du débit gazeux riche en argon (11) est mélangée avec des billes ayant un diamètre inférieur à 5mm, de préférence à 100 $\mu$m, pour former un mélange gazeux (15) contenant des billes, les billes étant en une matière adsorptive ou étant revêtues d'une matière adsorptive, la matière adsorptive étant capable d'adsorber de l'oxygène en présence d'argon aux températures d'opération de la colonne, la partie du débit gazeux riche en argon mélangée avec les billes est condensée puis est envoyée en tête de la colonne et un liquide de cuve (19) contenant des billes est soutiré de la colonne et traité pour enlever les billes, les billes enlevées sont régénérées pour enlever l'oxygène adsorbé et sont de nouveau mélangées avec la partie du débit gazeux riche en argon.

2. Procédé selon la revendication 1 dans lequel le mélange gazeux (15) contenant des billes comprend moins que 5% massique, de préférence moins que 1,5% massique, de billes.

3. Procédé selon la revendication 1 ou 2 dans lequel le liquide de cuve (19) est traité dans un cyclone (7) ou filtré pour enlever les billes (13).

4. Procédé selon la revendication 1, 2 ou 3 dans lequel les billes (13) sont régénérées en passant un débit d'azote gazeux (8) entre les billes à une température supérieure à 90 K.

5. Procédé selon l'une des revendications précédentes dans lequel la colonne (1) contient des garnissages structurés ou des plateaux.

6. Procédé selon l'une des revendications précédentes dans lequel la densité des billes diffère d'au plus 10% de celle de mélange condensé.

7. Procédé selon l'une des revendications précédentes dans lequel les billes sont en ou portent un revêtement en un matériau choisi dans le groupe zéolite ou matériau organométallique, par exemple LTA 4A ou CUK-1.

8. Procédé selon l'une des revendications précédentes dans lequel un liquide contenant des billes étant en une matière adsorptive ou étant revêtues d'une matière adsorptive, capable d'adsorber de l'oxygène en présence d'argon aux températures d'opération de la colonne, est soutiré à un niveau intermédiaire de la colonne, au moins certaines des billes étant de préférence saturées en oxygène.

9. Procédé selon l'une des revendications précédentes dans lequel un liquide contenant des billes étant en une matière adsorptive ou étant revêtues d'une matière adsorptive, la matière adsorptive étant capable d'adsorber de l'oxygène en présence d'argon aux températures d'opération de la colonne, est injecté à un niveau intermédiaire de la colonne.

10. Appareil de séparation d'argon par distillation cryogénique comprenant une colonne de distillation (1), des moyens pour envoyer un débit (2) contenant de l'argon, de l'oxygène et de l'azote, plus riche en argon que l'air, à la colonne de distillation, des moyens pour soutirer un débit gazeux riche en argon (3) en tête de la colonne, **caractérisé en ce qu'**il comprend un mélangeur (4) pour mélanger une partie (11) du débit gazeux riche en argon avec des billes ayant un diamètre inférieur à 5mm, voire inférieur à 100

μm pour former un mélange gazeux (15) contenant des billes, les billes étant en une matière adsorptive ou étant revêtues d'une matière adsorptive, la matière adsorptive étant capable d'adsorber de l'oxygène en présence d'argon aux températures d'opération de la colonne, un condenseur (5) pour condenser la partie gazeuse du mélange, et une conduite pour envoyer le mélange condensé contenant des billes (17) du condenseur en tête de la colonne, une conduite pour soutirer un liquide de cuve (19) contenant des billes de la colonne, un dispositif (7) pour séparer les billes du liquide de cuve, un appareil de régénération (29) pour régénérer les billes séparées pour enlever l'oxygène adsorbé et une conduite pour envoyer les biles régénérées (13) au mélangeur.

11. Appareil selon la revendication 10 comprenant un cyclone (7) ou un filtre pour enlever les billes (13) contenues dans le liquide de cuve (19).

12. Appareil selon la revendication 11 comprenant des moyens pour passer un débit d'azote gazeux (8) entre les billes à une température supérieure à 90 K.

13. Aappareil selon l'une des revendications précédentes 10 à 12 dans lequel la colonne (1) contient des garnissages structurés ou des plateaux.

14. Appareil selon l'une des revendications précédentes 10 à 13 dans lequel les billes sont en ou portent un revêtement en un matériau choisi dans le groupe zéolite ou matériau organométallique, par exemple LTA 4A ou CUK-1.

15. Appareil selon l'une des revendications précédentes 10 à 14 comprenant des moyens pour envoyer à un niveau intermédiaire de la colonne un liquide contenant des billes étant en une matière adsorptive ou étant revêtues d'une matière adsorptive, la matière adsorptive étant capable d'adsorber de l'oxygène en présence d'argon aux températures d'opération de la colonne.

**Patentansprüche**

1. Verfahren zur Abtrennung von Argon durch kryogene Destillation, wobei:

• ein Argon, Sauerstoff und Stickstoff enthaltender Strom (2), der reicher an Argon als an Luft ist, in eine Destillationskolonne (1) eingeleitet wird,
• ein argonreicher Gasstrom (3) am Kopf der Kolonne abgezogen wird,

**dadurch gekennzeichnet, dass** ein Teil (11) des argonreichen Gasstroms mit Kügelchen vermischt wird, die einen Durchmesser von weniger als 5 mm, vorzugsweise 100 pm, aufweisen, wodurch ein Kügelchen enthaltendes Gasgemisch (15) gebildet wird, wobei die Kügelchen aus einem adsorbierenden Stoff bestehen oder mit einem adsorbierenden Stoff beschichtet sind, der adsorbierende Stoff dazu fähig ist, Sauerstoff in Gegenwart von Argon bei Betriebstemperaturen der Kolonne zu adsorbieren, der mit den Kügelchen vermischte Teil des argonreichen Gasstroms kondensiert und dann in den Kopf der Kolonne eingeleitet wird eine Kügelchen enthaltende Sumpfflüssigkeit (19) von der Kolonne abgezogen und behandelt wird, um die Kügelchen zu entfernen, die entfernten Kügelchen regeneriert werden, um den adsorbierten Sauerstoff zu entfernen, und erneut mit dem argonreichen Teil des Gasstroms vermischt werden.

2. Verfahren nach Anspruch 1, wobei das Kügelchen enthaltende Gasgemisch (15) weniger als 5 Gew.-%, vorzugsweise weniger als 1,5 Gew.-% Kügelchen umfasst.

3. Verfahren nach Anspruch 1 oder 2, wobei die Sumpfflüssigkeit (19) in einem Zyklon (7) behandelt oder filtriert wird, um die Kügelchen (13) zu entfernen.

4. Verfahren nach Anspruch 1, 2 oder 3, wobei die Kügelchen (13) regeneriert werden, indem ein Stickstoffgasstrom (8) bei einer Temperatur über 90 K zwischen den Kügelchen durchgeleitet wird.

5. Verfahren nach einem der vorhergehenden Ansprüche, wobei die Kolonne (1) geordnete Packungen oder Böden enthält.

6. Verfahren nach einem der vorhergehenden Ansprüche, wobei die Dichte der Kügelchen um höchstens 10 % von derjenigen des kondensierten Gemisches abweicht.

7. Verfahren nach einem der vorhergehenden Ansprüche, wobei die Kügelchen aus einem Material bestehen oder mit einem Material beschichtet sind, das ausgewählt ist aus der Gruppe von Zeolith oder einem metallorganischen Material, beispielsweise LTA 4A oder CUK-1.

8. Verfahren nach einem der vorhergehenden Ansprüche, wobei eine Flüssigkeit, die Kügelchen enthält, die aus einem adsorbierenden Stoff bestehen oder mit einem adsorbierenden Stoff beschichtet sind, der dazu fähig ist, Sauerstoff in Gegenwart von Argon bei den Betriebstemperaturen der Kolonne zu adsorbieren, auf einer mittleren Höhe der Kolonne abgezogen wird, wobei zumindest einige der Kügelchen vorzugsweise mit Sauerstoff gesättigt sind.

9. Verfahren nach einem der vorhergehenden Ansprüche, wobei eine Flüssigkeit, die Kügelchen enthält, die aus einem adsorbierenden Stoff bestehen oder mit einem adsorbierenden Stoff beschichtet sind, wobei der adsorbierende Stoff dazu fähig ist, Sauerstoff in Gegenwart von Argon bei den Betriebstemperaturen der Kolonne zu adsorbieren, auf einer mittleren Höhe der Kolonne eingeleitet wird.

10. Vorrichtung zur Abtrennung von Argon durch kryogene Destillation, die eine Destillationskolonne (1), Mittel zum Einleiten eines Argon, Sauerstoff und Stickstoff enthaltenden Stroms (2), der reicher an Argon als an Luft ist, in die Destillationskolonne, Mittel zum Abziehen eines argonreichen Gasstroms (3) am Kopf der Kolonne umfasst,
**dadurch gekennzeichnet, dass** sie einen Mischer (4) zum Vermischen eines Teils (11) des argonreichen Gasstroms mit Kügelchen mit einem Durchmesser von weniger als 5 mm oder sogar 100 pm, um ein Kügelchen enthaltendes Gasgemisch (15) zu bilden, wobei die Kügelchen aus einem adsorbierenden Stoff bestehen oder mit einem adsorbierenden Stoff beschichtet sind, wobei der adsorbierende Stoff dazu fähig ist, Sauerstoff in Gegenwart von Argon bei den Betriebstemperaturen der Kolonne zu adsorbieren, einen Kühler (5), um den gasförmigen Teil des Gemisches zu kondensieren, und eine Leitung, um das Kügelchen (17) enthaltende kondensierte Gemisch vom Kühler zum Kopf der Kolonne zu leiten, eine Leitung zum Abziehen einer Kügelchen enthaltenden Sumpfflüssigkeit (19) von der Kolonne, eine Vorrichtung (7) zum Abtrennen von Kügelchen von der Sumpfflüssigkeit, eine Regenerationsvorrichtung (29) zum Regenerieren der abgetrennten Kügelchen, um den adsorbierten Sauerstoff zu entfernen, und eine Leitung, um die regenerierten Kügelchen (13) zum Mischer zu leiten, umfasst.

11. Vorrichtung nach Anspruch 10, die einen Zyklon (7) oder einen Filter zum Entfernen der in der Sumpfflüssigkeit (19) enthaltenen Kügelchen (13) umfasst.

12. Vorrichtung nach Anspruch 11, die Mittel zum Durchleiten eines Stickstoffgasstroms (8) bei einer Temperatur über 90 K zwischen die Kügelchen umfasst.

13. Vorrichtung nach einem der vorhergehenden Ansprüche 10 bis 12, wobei die Kolonne (1) geordnete Packungen oder Böden enthält.

14. Vorrichtung nach einem der vorhergehenden Ansprüche 10 bis 13, wobei die Kügelchen aus einem Material bestehen oder mit einem Material beschichtet sind, das ausgewählt ist aus der Gruppe von Zeolith oder einem metallorganischen Material, beispielsweise LTA 4A oder CUK-1.

**15.** Vorrichtung nach einem der vorhergehenden Ansprüche 10 bis 14, das Mittel zum Einleiten einer Flüssigkeit, die Kügelchen enthält, die aus einem adsorbierenden Stoff bestehen oder mit einem adsorbierenden Stoff beschichtet sind, wobei der adsorbierende Stoff dazu fähig ist, Sauerstoff in Gegenwart von Argon bei den Betriebstemperaturen der Kolonne zu adsorbieren, auf einer mittleren Höhe der Kolonne umfasst.

## Claims

**1.** Method for separating argon by cryogenic distillation, in which:

- a flow (2) containing argon, oxygen and nitrogen and being more rich in argon than the air is sent to a distillation column (1), and
- an argon-rich gas flow (3) is withdrawn at the top of the column,

**characterized in that** a portion (11) of the argon-rich gas flow is mixed with beads having a diameter of less than 5 mm, preferably less than 100 pm, to form a gas mixture (15) containing beads, the beads being made of an adsorptive material or coated with an adsorptive material, the adsorptive material being capable of adsorbing oxygen in the presence of argon at the column operating temperatures; the portion of the argon-rich gas flow mixed with the beads is condensed and then sent to the top of the column; and a bottom liquid (19) containing beads is withdrawn from the column and treated to remove the beads, the beads removed being regenerated to remove the adsorbed oxygen and being again mixed with the portion of the argon-rich gas flow.

**2.** Method according to Claim 1, in which the gas mixture (15) containing beads comprises less than 5 mass%, preferably less than 1.5 mass%, of beads.

**3.** Method according to Claim 1 or 2, in which the bottom liquid (19) is treated in a cyclone (7) or filtered to remove the beads (13).

**4.** Method according to Claim 1, 2 or 3, in which the beads (13) are regenerated by passing a nitrogen gas flow (8) between the beads at a temperature of greater than 90 K.

**5.** Method according to one of the preceding claims, in which the column (1) contains structured packings or plates.

**6.** Method according to one of the preceding claims, in which the density of the beads differs by at most 10% from that of the condensed mixture.

**7.** Method according to one of the preceding claims, in which the beads are made of or carry a coating made of a material selected from the group of zeolite or organometallic material, for example LTA 4A or CUK-1.

**8.** Method according to one of the preceding claims, in which a liquid containing beads, which are made of an adsorptive material or coated with an adsorptive material, which is capable of adsorbing oxygen in the presence of argon at the column operating temperatures, is withdrawn at an intermediate level of the column, some at least of the beads being preferably saturated with oxygen.

**9.** Method according to one of the preceding claims, in which a liquid containing beads, which are made of an adsorptive material or coated with an adsorptive material, the adsorptive material being capable of adsorbing oxygen in the presence of argon at the column operating temperatures, is injected at an intermediate level of the column.

**10.** Apparatus for separating argon by cryogenic distillation, comprising a distillation column (1), means for sending a flow (2) containing argon, oxygen and nitrogen and being more rich in argon than the air to the distillation column, and means for withdrawing an argon-rich gas flow (3) at the top of the column, **characterized in that** it comprises a mixer (4) for mixing a portion (11) of the argon-rich gas flow with beads having a diameter of less than 5 mm, or even less than 100 pm, to form a gas mixture (15) containing beads, the beads being made of an adsorptive material or coated with an adsorptive material, the adsorptive material being capable of adsorbing oxygen in the presence of argon at the column operating temperatures, a condenser (5) for condensing the gaseous portion of the mixture, and a line for sending the condensed mixture (17) containing beads from the condenser to the top of the column, a line for withdrawing a bottom liquid (19) containing beads from the column, a device (7) for separating the beads from the bottom liquid, a regeneration apparatus (29) for regenerating the separated beads to remove the adsorbed oxygen, and a line for sending the regenerated beads (13) to the mixer.

**11.** Apparatus according to Claim 10, comprising a cyclone (7) or a filter to remove the beads (13) contained in the bottom liquid (19).

**12.** Apparatus according to Claim 11, comprising means for passing a nitrogen gas flow (8) between the beads at a temperature of greater than 90 K.

**13.** Apparatus according to one of preceding Claims 10 to 12, in which the column (1) contains structured packings or plates.

14. Apparatus according to one of preceding Claims 10 to 13, in which the beads are made of or carry a coating made of a material selected from the group of zeolite or organometallic material, for example LTA 4A or CUK-1.

15. Apparatus according to one of preceding Claims 10 to 14, comprising means for sending a liquid containing beads, which are made of an adsorptive material or coated with an adsorptive material, the adsorptive material being capable of adsorbing oxygen in the presence of argon at the column operating temperatures, to an intermediate level of the column.

Figure 1

Figure 2

Figure 3a

Figure 3b

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5159816 A
- US 20140245781 A
- EP 0750933 A

**Littérature non-brevet citée dans la description**

- Industrial Gases Processing. Wiley, 2008
- *Ind. Eng. Chem. Res.,* 2010, vol. 49 (16
- **YOON JW ; JHUNG SH ; HWANG YK ; HUMPHREY SM ; WOOD PT ; CHANG JS.** Gas-Sorption Selectivity of CUK-1: A Porous Coordination Solid Made of Cobalt(II). *Pyridine-2,4-Dicarboxylic Acid, Advanced Materials,* vol. 19 (1830), 2007